# EUROPEAN PATENT APPLICATION

(11) **EP 4 613 105 A1**
(43) Date of publication of application: **10.09.2025**
(21) Application number: 24161301.7
(22) Date of filing: 05.03.2024
(51) Int. Cl.: A23J 1/14, A23J 1/16, A23J 3/14, A23J 3/22, A23L 29/231, A23L 33/125, A23L 33/185, A21D 2/18, A21D 2/26, A21D 10/00, A21D 13/062, A21D 13/064, A23L 19/12, A23L 19/18

(54) **A DOUGH PRODUCT ENRICHED WITH PLANT PROTEIN**

(71) Applicant: Synergy in Food Innovation B.V., 8015 AB Zwolle (NL)
(72) Inventor: Eggink, Frank, 8045 AB Zwolle (NL); Van der Vleuten, Thédor, 8045 AB Zwolle (NL)
(74) Representative: Pot, Emil

(57) **Abstract**

The invention relates to a potato product enriched in protein and fibre, and low in carbohydrate. The invention provides a versatile protein enriched potato food base which can suitably be used in the production of a variety of potato food products ranging from potato mash to French fries and meat alternatives. Due to the protein enrichment of the potato food base, the nutritional value of these potato food products is substantially increased. The invention also relates to a process for preparing protein enriched potato food products which are low in carbohydrates.

## Description

### Field of the Invention

The present invention relates to preparing dough products as an alternative for meat products, primarily based on potato products and enriched in plant protein.

### Background of the invention

A raw potato comprises about 79 wt.% water, 17 wt.% carbohydrates, 2 wt.% protein, 1.5 wt.% fibre and a marginal amount of fat. The carbohydrate component of potato largely consists of starch (88 wt.%). Amylopectin, which represents almost 80 wt.% of the starch in potato depending on the origin of the potato, is a so called fast releasing carbohydrate which causes a fast increase of sugar and insulin in the blood following consumption. Potato also contains a significant amount of soluble and insoluble dietary fibre and is a rich source of vitamin B6 and vitamin C. When a potato is cooked, its contents of vitamin B6 and vitamin C decline notably.

Potato protein is recognized as one of the most valuable non-animal proteins due to the high content of essential amino acids. The three major storage proteins classes are patatin, a 40 kDa glycoprotein, the 20-25 kDa protein family and various protease inhibitors. A large percentage of the potato harvest used by the potato processing industry is lost as waste (e.g. peels and cutting waste). Furthermore, the production of potato starch generates effluent streams that contain high levels of protein as well as by-products that mostly end up in animal feed. Consequently, the potato processing industry is currently facing two major challenges, i.e. (i) reduction of waste and (ii) addition of more value to by-products. Valuable by-products may be recovered from potato waste.

US2008/0226807 describes a process for preparing potato fibres by isolating fibres from the pulp of raw potatoes by separating the fibre fraction from potato fruit water and from starch. The isolated fibres are refined and dried. WO2014/011042 describes a process for the isolation of a native potato protein fraction from potato juice. The process comprises contacting potato juice using a support carrier, wherein the carrier is functionalised with a hydrophobic, mixed-mode ligand coupled to the carrier. A disadvantage of these processes is that only one or some of the byproducts are isolated, while others are still wasted and the processes used for isolation require energy, costs and time. US2020/205424 describes potato products prepared from dehydrated potato flakes or granules. The potato flakes are mixed with 3-12% protein, and 15-40% starch and 1-10% amylopectin to prepare a dry mix base from which the potato product is prepared. Therefore, these potato products are high (> 25%) in fast-releasing carbohydrates and have a high glycemic index, which is undesired. To produce these products, a drying process is required. Drying typically requires extra energy or time.

Potato derived products are amongst the biggest part in our food chain. There is still a need for potato products which may be prepared by an economically efficient and environmentally-friendly process. Preferably, these products are high in protein, high in fibres and lower in carbohydrates, in particular low in fast-releasing carbohydrates.

### Summary of the invention

The invention is summarized in the following embodiments:
- Embodiment 1. A dough additive comprising of dry matter in the form of:
   i) a plant protein, in a concentration of 8,5 - 50 wt.%, of the total dry matter;
   ii) a binder in a concentration of 5,5 - 60 wt.%, of the total dry matter, said binder being selected from pectin, fibres, starch and combinations thereof;
   iii) fat in a concentration of 0-15 wt.%, of the total dry matter, and
   iv) natural taste and/or colour aromas in a concentration of 0,25 - 25 wt.% of the total dry matter
- Embodiment 2. A dough additive according to embodiment 1, wherein the plant protein is selected from potato protein, pea protein, soy protein, wheat protein, fava protein.
- Embodiment 3. A dough additive according to embodiment 1 or 2, wherein the binder is obtained from potato.
- Embodiment 4. A dough additive according to any one of the preceding embodiments 1 to 3, wherein the binder preferably contains, calculated by weight of total dry matter, 0.5-2 wt.% of pectin, or 1.5-5 wt.% of fibres, or 20-34 wt.% of starch.
- Embodiment 5. A dough additive according to any one of the preceding embodiments 1 to 4, wherein the starch is modified starch.
- Embodiment 6. A dough product comprising the dough additive of any of the preceding embodiments 1 to 5, and further comprising i) a total water content of 25-30 wt.%, and ii) a grinded or cutted fresh potato, the dry matter of said potato constituting 20-25 wt.% of the total dry matter of the dough product.
- Embodiment 7. A dough product comprising the dough additive of any of the preceding embodiments 1 to 5, wherein the dry matter (a) a plant protein is in a concentration of 4-25 wt.%, of the total dry matter of the dough product; b) a binder in a concentration of 0,5 - 33 wt.% of the total dry matter of the dough product, said binder being selected from pectin, fibres, starch and combinations thereof, (c) fat in a concentration of 0-40 wt.%, of the total dry matter of the dough product, and (d) natural taste and/or colour aromas in a concentration of 0,25 - 0,75 wt.% of the total dry matter of the dough product, and further comprising i) a total water content of 25-30 wt.%, and ii) a grinded or cutted fresh potato, the dry matter of said potato constituting 20-25 wt.% of the total dry matter of the dough product.
- Embodiment 8. A dough product of embodiment 6 or 7, wherein the potato is selected from the list of a ground potato, blanched potato, fried potato and potato materials from waste stream.
- Embodiment 9. A dough product according to any of the embodiment 6 to 8, wherein the dough product is heated for 5-20 minutes at a temperature in the range of 80 DEG C - 120 DEG C, preferably using 60-100% steam.
- Embodiment 10. A dough product according to any of the previous embodiment 6 to 8, wherein the dough product is heated for 8 - 12 minutes at a temperature below 100 DEG C, using 75% - 85% steam.
- Embodiment 11. A food product prepared from a dough product according to any of the preceding embodiments 6 to 10, by means of frying, baking, grilling or steaming, and wherein the prepared food product has a water content of 20 - 25 wt.% .
- Embodiment 12. A process of preparing a dough product according to any of the preceding embodiments 6 to 10, said process comprising the mixing of the dough additive of any of the preceding claims 1 to 5, with a grinded or cutted fresh potato, preferably selected from the list of a ground potato, blanched potato, fried potato and potato materials from waste stream.
- Embodiment 13. A process of preparing a dough product according to embodiment 12, providing it in a particular shape representing the shape of an existing meat product.
- Embodiment 14. A process according to embodiment 12 or 13, whereafter the dough product is fried, baked, grilled or steamed.
- Embodiment 15. A meat alternative comprising of a dough product according to any of the embodiments 6 to 10, having been processed according to embodiment 14.

### Detailed description of the invention

A first aspect of the present invention relates to a food product, in particular a dough product, having a water content of 25-30 wt.%, and further comprising of a) a grinded or cut fresh potato and b) a dough additive, the dough additive comprising of a plant protein, in a concentration of 8,5 - 50 wt.%, of the total dry matter of the dough additive; ii) a binder in a concentration of 5,5 - 60 wt.%, of the total dry matter of the dough additive, said binder preferably being selected from pectin, fibres, starch and combinations thereof, iii) fat in a concentration of 0-15 wt.%, of the total dry matter of the dough additive, and iv) natural taste and/or colour aromas in a concentration of 0,25 - 25 wt.% of the total dry matter of the dough additive.

### Definitions

As used herein, certain terms may have the following defined meanings. As used in the specification and claims, the singular forms "a", "an" and "the" include plural references unless the context clearly dictates otherwise. For example, the term "a plant protein" includes a plurality of plant proteins, including mixtures thereof. Similarly, use of "a binder" for preparation of the dough as described herein contemplates using one or more binders of this invention for such preparation unless the context clearly dictates otherwise.

"A," "an," and "the": these singular form terms include plural referents unless the content clearly dictates otherwise. The indefinite article "a" or "an" thus usually means "at least one". Thus, for example, reference to "a cell" includes a combination of two or more cells, and the like.

"About" and "approximately": these terms, when referring to a measurable value such as an amount, a temporal duration, and the like, is meant to encompass variations of ±20% or ±10%, more preferably ±5%, even more preferably ±1%, and still more preferably ±0.1% from the specified value, as such variations are appropriate to perform the disclosed methods. Additionally, amounts, ratios, and other numerical values are sometimes presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified. For example, a ratio in the range of about 1 to about 200 should be understood to include the explicitly recited limits of about 1 and about 200, but also to include individual ratios such as about 2, about 3, and about 4, and sub-ranges such as about 10 to about 50, about 20 to about 100, and so forth.

"And/or": The term "and/or" refers to a situation wherein one or more of the stated cases may occur, alone or in combination with at least one of the stated cases, up to with all of the stated cases.

"Comprising": this term is construed as being inclusive and open ended, and not exclusive. Specifically, the term and variations thereof mean the specified features, steps or components are included. These terms are not to be interpreted to exclude the presence of other features, steps or components.

Exemplary": this terms means "serving as an example, instance, or illustration," and should not be construed as excluding other configurations disclosed herein.

"Masking tool" as used herein shall mean a tool that removes the impurities from the chemical reaction of the plant based protein. The masking tool is able to mask the off-note without masking the main flavour of the product.

"Ground potato" as used herein shall mean a potato harvested without being treated (washed, peeled etc).

"Blanched potato" as used herein shall mean the process of heating peeled and cut potato's in 90°C water for approx. 3 minutes, wherein it is preferred to use a small amount of salt or phosphate.

"Fried potato" as used herein shall mean pieces of potato cooked in oil or fat.

"Waste stream" as used herein shall mean the complete flow of potato waste from its domestic or industrial source. E.g. cut waste, slivers, pre-fried, packed product out of shelf life.

"Modified starch" as used herein shall mean starches extracted from grains and vegetables, such as wheat, maize, potatoes, that are subsequently been improved to develop specific characteristics, such as the ability to bring texture and structure to the food product to which they are added.

"Grinding" as used herein shall mean an abrasive machining process that uses a grinding wheel or grinder as the cutting tool. Grinding is a subset of cutting, as grinding is a true metal-cutting process.

"Cutting" as used herein shall mean dicing or cutting a product physically with a knife of set of knifes. Eighter by hand of by bowl chopper.

The invention described hereunder is a dough additive comprising of dry matter in the form of: (a) a plant protein; (b) a binder being selected from pectin, fibres, starch and combinations thereof; (c) fat and (d) natural taste and/or colour aromas. The invention described hereunder is also a dough product comprising the aforementioned dough additive, further comprising i) a total water content of 25-30 wt.%, and ii) dry matter in the form of a grinded or cutted fresh potato, the dry matter of said potato constituting 20-25 wt.% of the total dry matter of the dough product.

One of the advantages of the dough product according to the invention is that it is high in protein, high in fibres and low in carbohydrates. This has the advantage that it has the nutritional value of potato, but not the high starch content which is linked to diabetes and a high glycemic index. Another advantage of the dough product according to the invention is that vitamins, minerals and proteins may be added to create a potato product with high nutritional value. Yet another advantage of the dough product according to the invention is that that it may be prepared from waste streams, such as potato processing waste streams or potato starch processing waste streams. This means valorisation of these waste streams, because these waste streams may be turned into healthy products for human consumption instead of just being used as or in animal feed products. Another advantage is that the dough product according to the invention may be prepared by a process which may use waste streams without pre-treatment, in particular without drying or dehydrating as pre-treatment. Drying and dehydration require a lot of energy.

A further advantage of the process for preparing the dough product according to the invention is that it is very versatile and allows for the addition of desired ingredients. It is also very versatile in the sense that it does not require fractionation of waste streams. On contrary, the potato material in the waste stream can be used with all its ingredients. For example, there is no need for separating and removing purifying potato protein before subsequent use. This means a simpler and more economical process than existing processing for using potato-derived waste streams.

The dough product according to the invention comprises ground potato. In the present context, the ground potato that has been comminated to produce a fluid mass is preferably composed of small particles of potato tissue. The potato material as used in the invention may be any potato-derived material, such as whole raw potatoes or, preferably, potato material obtained from potato-derived processing streams, such as from potato processing waste streams (e.g. cutting waste) or from potato starch processing waste streams. Suitable examples include waste effluent, potato fruit juice, potato fruit water, cutting waste and peeling waste. These waste streams preferably comprise potato material with all the constituents of potato, including starch, proteins and fibres. The potato material may have been heat treated, preferably blanched. In one embodiment, the potato material is selected from peeled potatoes, pieces of peeled potatoes and combinations thereof, followed by grinding. The ground potato is preferably a fluid mass, since potato-derived processing waste streams are frequently aqueous fractions, such as potato fruit juice or potato cutting water, and can be used as such without prior drying.

Preferably at least 80 wt.% of the ground potato to be used in the dough product consists of particles having a weight average mean diameter of 50 to 1,000 µm, more preferably of 100 to 500 µm and most preferably of 120 to 400 µm. The particle size distribution of the ground potato may suitably be determined using a set of sieves of different mesh sizes. Rinse water may be used to facilitate the sieving.

The dough additive according to the invention comprises 4-25 wt.% plant protein. In the context of the dough product or dough additive, the term "plant protein" does not refer to the about 2% potato protein that is contained in the ground potato and makes up the dough product, but refers to any purified plant protein and is used for the dough additive. The dough additive preferably comprises purified plant protein in a concentration of 5-22 wt.%, more preferably 7-20 wt.%, most preferably 8-18 wt.%, calculated by weight.

The plant protein in the dough additive is preferably obtained from the following sources: root vegetable, legume, cereal, oil seed or green leaves. More preferably, the plant protein is obtained from root vegetable or legume. Most preferably, the plant protein is obtained from potato. In a preferred embodiment, the plant protein is potato protein wherein at least 30 wt.%, more preferably at least 33 wt.%, most preferably at least 35 wt.% of the potato protein is patatin. In another preferred embodiment, the plant protein is potato protein, wherein at least 30 wt.%, more preferably at least 33 wt.%, most preferably at least 35 wt.% of the potato protein has a molecular weight of 4-35 kDa. The purified plant protein may be native or modified. Modified refers to enzymatic, physical or chemical modification, such as hydrolyzation, cross-linking or denaturation. Native protein is not denatured and has preferably maintained most or all of its functionalities, such as solubility, foaming, texturizing or thermo-gelling capacity. In a preferred embodiment, part of the added plant protein is in native form. Preferably, at least 50-95% of the plant protein used in the dough additive of the invention is in native form. Suitable commercially available plant proteins which can be used in the dough additive of the invention are for example Solanic^{®}200, Solanic ^{®}300 (both AVEBE, Veendam, the Netherlands), EmproTM K (Emsland Group^{®}, Emlichheim, Germany), Protafy^{®}130 (KMC, Brande, Denmark), R88^{®}, R94^{®} (both Branston, Branston/Lincoln, United Kingdom).

The dough additive of the invention hereunder comprises a binder that preferably contains, calculated by weight of total dry matter, 0.5-2 wt.% of pectin, or 1.5-5 wt.% of fibres, or 20-34 wt.% of starch, or a combination thereof. The binder of the invention shall be selected from starch, pectin, cellulose fibres, or combinations thereof. In the context of the dough product of the invention, the term "binder" does not include the starch, pectin or cellulose fibres that are contained in the ground potato, unless indicated otherwise.

In one embodiment of the invention, the dough additive comprises maximally 33 wt.% starch, calculated by weight of dry matter, preferably 20-33 wt.%, more preferably 22-33 wt.% and most preferably 28-33 wt.% starch. The starch is preferably non-modified starch. In the context of the present invention, the term "non-modified starch" refers to a starch that has not been chemically modified. Native starch and pregelatinized starch are examples of non-modified starch. Non-modified starch may comprise amylose and amylopectin units or monomers. Preferably, 75%-100% of the monomers in the non-modified starch is amylopectin. In a more preferred embodiment, the non-modified starch is waxy starch. Preferably, at least 95 wt.%, more preferably at least 99 wt.% of the waxy starch is amylopectin. In a preferred embodiment of the invention, the starch is obtained from potato.

In waste streams, most of the starch naturally present in the potato will be gelatinised due to blanching in the main process from which the waste stream is derived. Preferably, at least 50 wt.%, more preferably at least 70 wt.%, most preferably at least 90 wt.% of the starch in the ground potato is gelatinised. This has the advantage that it will not easily be taken up by the body. In the context of the present invention, pectin refers to the primary cell wall polysaccharide present in the middle lamellae of many fruits and vegetables. The main constituent of pectin is galacturonic acid. The pectin in the binder may be obtained from any fruit or vegetable, such as from citrus fruits or apples, but is preferably obtained from potato. In a preferred embodiment, the potato product contains, calculated by weight of dry matter, 0.5-5 wt.%, more preferably 0.8-4 wt.%, most preferably 1-3 wt.% of pectin. In the context of the present invention, the term "cellulose fibres" refers to natural cellulose comprising fibres that have not been chemically modified. Cellulose fibres typically are composed of a bundle of fibrils which in turn consist of small elements, called microfibrils. The term "cellulose fibres" encompasses mechanically processed cellulose fibres in which fibrils and/or microfibrils have been partly or completely separated. According to a particularly referred embodiment, the product contains, calculated by weight of dry matter, 1.5-20 wt.%, more preferably 2-15 wt.%, most preferably 2.5-10 wt. of cellulose fibres. In one embodiment, CMC E461, methyl cellulose, is used as a binder. The cellulose fibres employed in accordance with the present invention are preferably microfibrillated cellulose. Microfibrillated cellulose (MFC) is obtained through a fibrillation process of cellulose fibres. Using mechanical shearing, the cellulose fibres are separated into a three dimensional network of microfibrils with a large surface area. The obtained fibrils are much smaller in diameter compared to the original fibres, and can form a network or a weblike structure. MFC can be obtained from a variety of plant sources including, for example, citrus peel, sugar beet and potato. The cellulose fibres that are contained in the potato product as part of the binder preferably are obtained from potato. The binder preferably comprises both pectin and cellulose fibres. According to a particularly preferred embodiment, the binder comprises pectin, cellulose fibres and starch. According to a particularly preferred embodiment the complete binder is obtained from potato.

Plant protein and binder are typically contained in the potato product in a weight ratio plant protein : binder of 1:3 to 2:1, more preferably 1:2.5 to 1:1 and most preferably 1:2 to 1:1.2.

In the context of the present invention, the term "fat" refers triglyceride plant based oils, such as almond oil, coconut oil, olive oil, rapeseed oil and sun flower oil. They may be liquid or solid at room temperature and they are preferably recognized as safe for use in food.

The invention described hereunder is a dough additive comprising of dry matter in the form of: (a) a plant protein, in a concentration of 4-25 wt.%, of the total dry matter; (b) a binder in a concentration of 0,5 - 33 wt.%, of the total dry matter, said binder being selected from pectin, fibres, starch and combinations thereof; (c) fat in a concentration of 0-40 wt.%, of the total dry matter, and (d) natural taste and/or colour aromas in a concentration of 0,25 - 0,75 wt.% of the total dry matter. The invention described hereunder is also a dough product comprising the aforementioned dough additive, further comprising i) a total water content of 35-40 wt.%, and ii) dry matter in the form of a grinded or cutted fresh potato, resulting in the dry matter of potato derived material to constitute 40-85 wt.% of the total dry matter.

Preferably, the combination of the aforementioned components (a) to (d) constitutes at least 80 wt.%, more preferably at least 85 wt.%, most preferably at least 90 wt.% of the dry matter that is contained in the dough product. According to a particularly preferred embodiment, at least 95 wt.%, more preferably at least 98 wt.% and most preferably all of the proteins and carbohydrates that are contained in the dough product are potato derived.

The inventors have found that the flavour of the dough additive and dough product of the invention can be improved by incorporating (natural) flavouring. Accordingly, in a particularly preferred embodiment, the dough additive contains, calculated by weight of dry matter, 0,03-0,7 wt.%, more preferably 0,07-0,4 wt.% of (natural) flavouring. The flavouring is preferably a natural, allergen-safe flavouring.

The potato product of the present invention may suitably contain added nutrients such as vitamins, minerals, prebiotics, oils rich in omega-3 and/or omega-6 fatty acids and antioxidants. The inventors have found that the colour stability of the potato product, especially after cooking, can be improved by incorporating citric acid in the product. According to a particularly preferred embodiment of the invention, citric acid is added in the form of lemon juice. In another embodiment, the potato product comprises salt. Typically, the dough additive contains 0.5-2.5 wt.% of salt selected from sodium chloride, potassium chloride or combinations thereof.

Other ingredients that may suitably be incorporated in the potato product of the present invention include, for instance, spices, herbs, colouring and flavouring.

The dough product according to the present invention has a water content in the range of 35-40 wt.%. Water content is the amount of water contained in a product and may be calculated according to (total weight-dry weight)/total weight). Dry weight may be determined by drying a sample, for example in an oven, until a constant weight is obtained.

The potato product of the present invention may be used as a food base product, from which an end product, preferably a food product, is prepared, for example by frying, baking, grilling or steaming. The dough product may be a partially cooked food product that needs a final heat treatment or a fully cooked food product. According to a preferred embodiment, the potato product is shaped. More preferably, the dough product is shaped as strips (French fries), cylinders, cubes, balls or swirls. Accordingly, in one advantageous embodiment of the present invention, the dough product is a malleable food base or dough, comprising 40-55 wt.% water and 0-3 wt.% fat, and wherein the combination of water and the aforementioned components of the dough product (a) to (d) constitute at least 90 wt.% of the food product. The dough product is high in protein and fibre and low in carbohydrates, in particular in comparison to dough or food base prepared from potato (Solanum tuberosum) while not using the teaching of the present invention.

The dough product may be fried, baked, grilled or steamed to prepare a partially cooked food product having 35-40 wt.% water, for example a pre-fried, pre-steamed or pre-baked food product. In yet another advantageous embodiment, the dough product may be fried, baked, grilled or steamed to prepare a fully cooked food product, having a water content of 40-55 wt.%, which is selected from French fries, potato wedges, boiled potatoes, potato mash, baked potatoes and pommes duchesse. In yet another embodiment, the potato product may be fried, baked, grilled or steamed to prepare a fully cooked food product having a water content of 1.0-10 wt.%, such as a potato snack, most preferably potato chips. Preferably, the potato snack has a fat content of 0.5-35.0 wt.%, more preferably of 2.5-20.00 wt.%, calculated by weight of dry matter. These par-cooked and fully cooked food products prepared from the dough product according to the invention, are food products with lower carbohydrate content, but higher protein and fibre content than similar food products not prepared from the dough product according to the invention. The food products prepared from the dough product according to the invention therefore have increased nutritional value in comparison with similar food products, not prepared from the dough product according to the invention.

The dough product and the end products made therefrom are preferably vegetarian products, more preferably vegan products. These products according to the invention are high in protein and fibre and low in carbohydrates. The dough product according to the invention may be used to prepare a meat alternative, i.e. a product with the texture and appearance of meat, which may be used for meat replacement in a diet. The meat alternative obtained comprises high plant protein, high fibre and low carbohydrate and has hardly/no off-tastes. In one embodiment, a meat alternative is prepared comprising 10-15 wt. % protein, 28-34 wt.% starch and 7-12% fibres based on dry weight, and no off-tastes.

The final product of the present invention is preferably obtained by the preparation process described below which is a further aspect of the invention, the process comprising: i) providing blanched ground potato, ii) providing one or more sources of plant protein, said one or more sources of plant protein having a protein content of at least 35 wt.% of the plant protein source; iii) providing one or more binding agents, said one or more binding agents selected from pectin, cellulose fibres, starch and combinations thereof; and iv) mixing the ground potato, the one or more sources of plant protein and the one or more binding agents to produce a dough product. Preferably at least 80 wt.% of the ground potato consists of particles having a weight average mean diameter of 50 to 1,000 µm, more preferably of 100 to 500 µm and most preferably of 120 to 400 µm. The particle size distribution of the ground potato may suitably be determined using a set of sieves of different mesh sizes. Rinse water may be used to facilitate the sieving. The potato material which is ground may be any potato-derived material, such as whole raw potatoes or, preferably, potato material obtained from potato-derived processing streams, such as from potato processing waste streams or from potato starch processing waste streams. Suitable examples include waste effluent, potato fruit juice, potato fruit water, cutting waste water and peeling waste. These waste streams preferably comprise potato material with all the constituents of potato, including starch, proteins and fibres. The potato material may have been heat treated, more preferably blanched. In one embodiment, the potato material is selected from peeled potatoes, pieces of peeled potatoes and combinations thereof, followed by grinding. The ground potato is preferably a fluid mass, since potato derived processing waste streams are frequently aqueous fractions, such as potato fruit juice or potato cutting water, and can be used as such without prior drying. Preferably, at least 50 wt.%, more preferably at least 70 wt.%, most preferably at least 90 wt.% of the starch in the ground potato is gelatinised. The one or more sources of plant protein employed in the process preferably contain a protein content of at least 35 wt.% of the plant protein source, more preferably at least 45 wt.%, at least 50 wt. % or 60 wt. %, most preferably at least 70 wt.%, 85 wt.% or 90 wt.% protein. In one embodiment, the protein is potato protein. In another preferred embodiment, the one or more sources of plant protein employed in the process include a source of low molecular weight potato protein, said source of low molecular weight potato protein containing at least 35 wt.% of potato protein having a molecular weight of 4-35 kDa. Even more preferably, the source of low molecular weight potato protein contains at least 45 wt.%, more preferably at least 50 wt.% of potato protein having a molecular weight of 4-35 kDa. In a preferred embodiment, the plant protein of the invention is selected from potato protein, pea protein, soy protein, wheat protein or fava protein.

The one or more binding agents employed in the present process preferably contain at least 50 wt.%, more preferably at least 65 wt.% of binding component selected from pectin, cellulose fibres (e.g. citrus fibre / potato fibre), starch and combinations thereof. The starch is preferably non-modified starch to stay as close as possible to potato. According to a preferred embodiment, the present process employs a binding agent comprising 10-40 wt.% pectin and 30-70 wt.% cellulose fibres. Most preferably, this binding agent is obtained from potato.

According to a particularly preferred embodiment, the present process employs at least two binding agents, i.e. a first binding agent containing pectin and cellulose fibres and a second binding agent containing modified and/or non-modified starch. Preferably, all binding agents employed in the present process are obtained from potato. Suitable potato-derived binding agents are commercially available and are typically obtained as a by-product of potato starch manufacture. In a particularly preferred embodiment, the process comprises mixing 40-60 parts by weight of the ground potatoes with 1-15 parts by weight of the one or more sources of plant protein and 2-10 by weight of the one or more binding agents. Preferably, also 10-35 parts by weight of water are admixed to produce the potato dough. All these figures are based on wet weight. In this way, a dough product having a water content of 35-40 wt.%, and comprising: (a) ground potato, the dry matter of said ground potato constituting 20-25 wt.% of the dry matter that is contained in the potato product; (b) plant protein in a concentration of 4-25 wt.%, calculated by weight of dry matter; (c) binder in a concentration of 3-33 wt.%, calculated by weight of dry matter, said binder being selected from pectin, cellulose fibres, starch and combinations thereof; (d) fat in a concentration of 0-40 wt.%, calculated by weight of dry matter, whereby the potato product contains maximally 33 wt.% starch, calculated by dry weight of the dough product, is obtained.

As already explained above in relation to the dough product of the present invention, a variety of food ingredients may be admixed to the ground potatoes, water, the one or more sources of plant protein and the at least one binding agent. The process preferably comprises the addition of 0.1 to 1.5 parts by weight of lemon juice, in particular to inhibit browning. The process preferably further comprises shaping of the dough product. Preferably, the dough product is further shaped by extrusion, moulding, roller pressing or 3D printing. In a particularly preferred embodiment, the dough shaping is done at a temperature of 4-65 DEG C, more preferably of 4-40 DEG C. In accordance with a further preferred embodiment, the shaped dough is fried, baked, grilled or steamed. From mixing to shaping may be a batch process with separate steps or a continuous process, where all steps are performed in line.

In one embodiment, ground potatoes, protein, binders, salt, oil, taste system, starch and water are mixed into a homogeneous mixture, which mixture is then heated to a temperature in the range of 80 DEG C - 120 DEG C, preferably using 60-100% steam, for 5-20 minutes. In one preferred embodiment, the mixture is heated to a temperature of maximally 100 DEG C for 10 minutes using 80% steam. These conditions restore functionality of some or all of the denatured protein and in this way allow for the production of a meat alternative. This may be done in a convenient way in a PowerHeater^{®} system (Technology, Kolding, Denmark). However, any other system may be used if it gives a similar effect.

A method for preparing a meat alternative by heating a dough product according to the invention to a temperature in the range of 80 DEG C - 120 DEG C, preferably using 60-100% steam, for 5-20 minutes, more preferably to a temperature of maximally 100 DEG C for 10 minutes using 80% steam, is also part of the invention. The meat alternative obtained from preparing the dough product, comprising high plant protein, high fibre and low carbohydrate is also encompassed by the present invention. It has no/hardly off-tastes. In one embodiment, a meat alternative according to the invention comprises based on dry weight, 10-15 wt. % protein, 28-34 wt.% starch and 7-12% fibres, without off-tastes.

The product of the invention hereunder, is dough additive comprising of dry matter in the form of:
(a) a plant protein, in a concentration of 8,5 - 50 wt.%, of the total dry matter;
(b) a binder in a concentration of 5,5 - 60 wt.%, of the total dry matter, said binder being selected from pectin, fibres, starch and combinations thereof;
(c) fat in a concentration of 0-15 wt.%, of the total dry matter, and
(d) natural taste and/or colour aromas in a concentration of 0,25 - 25 wt.% of the total dry matter In a preferred embodiment of the invention, the plant protein is selected from potato protein, pea protein, soy protein, wheat protein, fava protein.
The binder of the dough additive of the invention is preferably obtained from potato, more preferably the binder contains, calculated by weight of total dry matter, 0.5-2 wt.% of pectin, or 1.5-5 wt.% of fibres, or 20-34 wt.% of starch. Even more preferably, the starch of the dough additive of the invention is modified starch.

Also as part of the invention described hereunder is a dough product comprising the aforementioned dough additive and any of its ingredients described, in the % wt as described, further comprising i) a total water content of 35-40 wt.%, and ii) dry matter in the form of a grinded or cutted fresh potato, the dry matter of said potato constituting 20-25 wt.% of the total dry matter. In a preferred embodiment, the potato of the dough product of the invention hereunder is selected from the list of a ground potato, blanched potato, fried potato and potato materials from waste stream. The invention also comprises a dough product according to the aforementioned specifications, wherein the dough product is heated for 5-20 minutes at a temperature in the range of 80 DEG C - 120 DEG C, preferably using 60-100% steam. In a preferred embodiment, the dough product of the invention hereunder is heated for 8-12 minutes at a temperature below 100 DEG C, using 75% - 85% steam.

An important part of the invention hereunder is a food product prepared from a dough product of the invention described hereunder, by means of frying, baking, grilling or steaming, and wherein the prepared food product has a water content of 10 - 20 wt.%.

The invention hereunder also contains a process of preparing the dough product of the invention as described hereunder, said process comprising the mixing of the dough additive of the invention, with the potato selected from the list of a ground potato, blanched potato, fried potato and potato materials from waste stream. In a preferred embodiment, the process of the invention preparing the dough product provides the dough product in a particular shape representing the shape of an existing meat product. In a more preferred embodiment the process of the invention provides the dough product to being fried, baked, grilled or steamed.

As a final part of the invention described hereunder is a meat alternative comprising of dough product of the invention having been processed according process of the invention.

### EXAMPLES

### Example 1 Preparation of a potato dough

A dough product was prepared on the basis of the recipe shown in Table 1.

**Table 1 in percentages (%)**

| | |
|---|---|
| Potato (cutting wast) | 41,00 |
| Sunflower oil | 3,00 |
| Protafy 130 | 14,00 |
| Potato fibre | 5,00 |
| X amylo 100 | 3,00 |
| CMC Vivapur MC16 | 1,50 |
| Vegan nugget geschmack | 2,70 |
| Umami booster | 0,40 |
| Salt | 1,20 |
| Water | 28,20 |
| Total | 100 |
| 1. Protafy^{®} 130; 90.5 wt.% potato protein (KMC, Brande Denmark) 2. Potato fibre KMC; potato fibre containing 48% insoluble dietary fibre, 18% soluble dietary fibre (KMC, Brande Denmark) 3. X-amylo 100^{™}; starch-based binder (KMC, Brande, Denmark) 4. Vegan nugget geschmack; chicken flavor (Novataste, Salzburg, Austria) 5. Umami booster (Novataste, Salzburg, Austria) 6. CMC Vivapur MC 16 (Rettenmaier, Rosenberg, Germany) | |

The dough product was prepared as follows. Blanched potato (cutting) waste, was grinded at 3 mm diameter. First all liquid ingredients are blended to the potato mass, second the premix of dry ingredients was blended in. The potato mixture was blended until a homogeneous mass having a water content of about 62 wt.% was obtained. This dough comprised, based on dry weight, about 10-23 wt.% protein, about 32-36 wt. % starch and about 7-8 wt. % fibres. This means more than double the amount of fibre and protein, and about 30% reduction of starch, in comparison to a potato. Next, the potato mass having a temperature of approximately 4°C was shaped into a burger (Ø90 mm x 5 mm) and/or nugget shape (40 mm x 35 mm x 8 mm). The dough products were pre-fried for 40 seconds in sunflower oil. After frying, the pre-fried dough products were cooled, frozen and packaged.

### Example 2 Vegan Nuggets

The pre-fried vegan Nugget of Example 1 were prepared for consumption by introducing the frozen pre-fried vegan Nuggets into a frier filled with hot oil (180 °C). After 3 minutes the vegan Nuggets were removed from the fryer. The vegan Nugget so obtained were evaluated by an expert panel and compared to ordinary (vegan) Nuggets of similar dimensions. It was found that both in terms of taste and appearance the vegan Nuggets made from the dough product according to the present invention were very similar to most sold Nuggets, however, the vegan Nuggets made from the dough product of the invention contained more protein, more fibres and a lower amount of starch than vegan Nuggets prepared from other protein sources, see table below.

| Nutrient | Benchmark | Prototype invention |
|---|---|---|
| Carbohydrate | 18,00% | 5-10% |
| Protein | 8,00% | 13,00% |
| Fibre | 3,60% | 7,50% |

### Example 3 Preparation of a meat alternative

A dough product was prepared on the basis of the recipe shown in Table 2. The precooked potato waste stream was ground using a Robot-coup (Robot-coup, Mont Saint Geneve, Belgium), grinder resulting in ground potato having a weight average mean diameter of 50 to 1,000 µm. Then the ground potato was mixed with the dough additive of the invention using a Hobart mixer until a homogenous mixture, having a water content of 25-30 wt.%, was obtained. After blending the dough product was shaped into the desired shape. A predust was added. The next step was to batter the predusted dough. When the batter was set to the product the breadcrumbs where added. This final dough product comprised, based on dry weight, about 18 wt. % protein, about 43 wt.% starch and about 9% fibres. This means 6 times the amount of protein, 5 times the amount of fibres and about 50% reduction of starch in comparison to a potato.

**Table 2 - Nugget preparation**

| | % |
|---|---|
| Potato (cutting wast) | 32,00 |
| Doug additive | 18,00 |
| Water | 30,00 |
| Dusting (Koopmans) | 3,00 |
| Battermix (Koopmans) | 4,00 |
| Breadcrumb | 13,00 |
| Total | 100,00 |

Doug additive: (potato) protein (44%), (potato) fibre (16%), (potato) starch (11%), oil (12%) and aroma/taste components (17%):
1. Protafy^{®} 130; 90.5 wt.% potato protein (KMC, Brande, Denmark)
2. Fibre Bind 400; potato fibre; (KMC, Brande, Denmark)
3. X-amylo 100^{™}; starch-based binder (KMC, Brande, Denmark)
4. Umami flavour; natural flavour; (Exter B.V., Zaandam, The Netherlands)
5. Nuggets Aroma; natural flavour; (Frutarom, Holdorf, Germany)
   6. CMC Vivapur MC 16 (Rettenmaier, Rosenberg, Germany)

The dough product was fed into a PowerHeater^{®} system (Technology, Kolding, Denmark) and heated to a temperature of maximally 100 DEG C for 10 minutes using 80% steam. The dough product obtained was formed in blocs which, in the continuation of the process, were chopped in cubes or grinded. The formed layer structure provided a meat like structure which could be as a meat alternative, showing the restored texturizing functionality of the potato protein. There were no off-tastes obtained. This high protein meat alternative without off tastes was the result of the unique combination of the recipe and process used.

## Claims

1. A dough additive comprising of dry matter in the form of:
(a) a plant protein, in a concentration of 8,5 - 50 wt.%, of the total dry matter;
(b) a binder in a concentration of 5,5 - 60 wt.%, of the total dry matter, said binder being selected from pectin, fibres, starch and combinations thereof;
(c) fat in a concentration of 0-15 wt.%, of the total dry matter, and
(d) natural taste and/or colour aromas in a concentration of 0,25 - 25 wt.% of the total dry matter

2. A dough additive according to claim 1, wherein the plant protein is selected from potato protein, pea protein, soy protein, wheat protein, fava protein.

3. A dough additive according to claim 1 or 2, wherein the binder is obtained from potato.

4. A dough additive according to any one of the preceding claims 1 to 3, wherein the binder preferably contains, calculated by weight of total dry matter, 0.5-2 wt.% of pectin, or 1.5-5 wt.% of fibres, or 20-34 wt.% of starch.

5. A dough additive according to any one of the preceding claims 1 to 4, wherein the starch is modified starch.

6. A dough product comprising the dough additive of any of the preceding claims 1 to 5, and further comprising i) a total water content of 35-40 wt.%, and ii) a grinded or cutted fresh potato, the dry matter of said potato constituting 20-25 wt.% of the total dry matter of the dough product.

7. A dough product comprising the dough additive of any of the preceding claims 1 to 5, wherein the dry matter (a) a plant protein is in a concentration of 4-25 wt.%, of the total dry matter of the dough product; b) a binder in a concentration of 0,5 - 33 wt.% of the total dry matter of the dough product, said binder being selected from pectin, fibres, starch and combinations thereof, (c) fat in a concentration of 0-40 wt.%, of the total dry matter of the dough product, and (d) natural taste and/or colour aromas in a concentration of 0,25 - 0,75 wt.% of the total dry matter of the dough product, and further comprising i) a total water content of 35-40 wt.%, and ii) a grinded or cutted fresh potato, the dry matter of said potato constituting 20-25 wt.% of the total dry matter of the dough product.

8. A dough product of claim 6 or 7, wherein the potato is selected from the list of a ground potato, blanched potato, fried potato and potato materials from waste stream.

9. A dough product according to any of the claims 6 to 8, wherein the dough product is heated for 5-20 minutes at a temperature in the range of 80 DEG C - 120 DEG C, preferably using 60-100% steam.

10. A dough product according to any of the previous claims 6 to 8, wherein the dough product is heated for 8-12 minutes at a temperature below 100 DEG C, using 75% - 85% steam.

11. A food product prepared from a dough product according to any of the preceding claims 6 to 10, by means of frying, baking, grilling or steaming, and wherein the prepared food product has a water content of 10 - 20 wt.% .

12. A process of preparing a dough product according to any of the preceding claims 6 to 10, said process comprising the mixing of the dough additive of any of the preceding claims 1 to 5, with a grinded or cutted fresh potato, preferably selected from the list of a ground potato, blanched potato, fried potato and potato materials from waste stream.

13. A process of preparing a dough product according to claim 12, providing it in a particular shape representing the shape of an existing meat product.

14. A process according to claim 12 or 13, whereafter the dough product is fried, baked, grilled or steamed.

15. A meat alternative comprising of a dough product according to any of the claims 6 to 10, having been processed according to claim 14.
